# EUROPEAN PATENT SPECIFICATION

(11) **EP 0 443 265 B1**
(45) Date of publication and mention of the grant of the patent: **07.06.1995**
(21) Application number: 90313977.2
(22) Date of filing: 20.12.1990
(51) Int. Cl.: G11B 23/04, G11B 23/107, G11B 23/037

(54) **Videotape adaptor for use with a cartridge**
Adapter für Videobänder und seine Verwendung mit einer Kassette
Adapteur pour bande vidéo à utiliser avec une cartouche

(30) Priority: 20.02.1990 US 481986
(43) Date of publication of application: 28.08.1991
(73) Proprietor: MINNESOTA MINING AND MANUFACTURING COMPANY, St. Paul, Minnesota 55133-3427 (US)
(72) Inventor: Turgeon, Thomas A., c/o Minnesota Mining and, St. Paul, Minnesota 55133-3427 (US); Weeks, Jerrold K., c/o Minnesota Mining and, St. Paul, Minnesota 55133-3427 (US); Skavnak, James E., c/o Minnesota Mining and, St. Paul, Minnesota 55133-3427 (US); Kaman, John F., c/o Minnesota Mining and, St. Paul, Minnesota 55133-3427 (US)
(74) Representative: Baillie, Iain Cameron

(56) References cited:
- EP-A- 0 201 156
- EP-A- 0 395 238
- GB-A- 2 162 150

## Description

### FIELD OF THE INVENTION

The present invention relates to magnetic tape cartridges and adaptors for use in videotape machines. More particularly the invention relates to an adaptor which adapts a specialized video-cartridge to the VHS standard videocassette format.

### DESCRIPTION OF THE PRIOR ART

Most home videotape machines use magnetic recording media supplied in a videocassette format. The typical videocassette contains both a supply reel and a take-up reel. The inclusion of the empty take-up reel within the videocassette housing makes this format inefficient for tape storage.

The storage of videotape on a single supply reel tape cartridge is an attractive alternative to the video-cassette. The prior art teaches the use of a single supply reel video cartridge for use with an adaptor in British Patent Application GB 2,162,150A published 29 January 1986.

In use, the prior art tape cartridge is assembled into the adaptor to construct an assembly which forms a conventionally sized videocassette. However, this prior art system exhibits a number of problems which must be addressed to produce a commercially useful video-cartridge product.

For example, the tape in the cartridge must be connected to a take-up reel located in the adaptor. In this prior art system, a message cartridge is placed into a modified cassette and a tape leader is drawn out of the cartridge by hand and attached at the take-up spool.

### SUMMARY OF THE INVENTION

In contrast to the prior art, the adaptor of the present invention automatically connects the tape in the cartridge to the take-up reel in the adaptor.

The videotape adaptor includes mechanisms which cooperate with the inserted cartridge to automatically interconnect the tape on the supply reel in the cartridge with the take-up reel located in the adaptor. In operation, the insertion of the cartridge into the adaptor mechanically interconnects a tape connector with a tether connector forming an interconnection.

The adaptor of the present invention includes a novel winding mechanism in combination with a novel take-up reel.

The winding mechanism is provided to advance the interconnection from the supply reel, to the take-up reel. This operation must be completed prior to insertion of the adaptor into the videotape machine.

At the conclusion of play within the videotape machine, the winder mechanism is also used to rewind the interconnection to the supply reel of the adaptor.

In addition, the adaptor contains a novel take-up reel with a clutch mechanism to reduce rewind drag. The clutch is disengaged during the manual advance and rewind operations.

### BRIEF DESCRIPTION OF THE DRAWING

In the drawing, in which like reference numerals indicate corresponding structures throughout the views:
FIG. 1 is a top view of the adaptor showing the gear train in phantom view;
FIG. 2 is a top view of a cartridge suitable for use with the adaptor;
FIG. 3 is a top view of the cartridge inserted into the adaptor with the adaptor door in the closed position;
FIG. 4 is an exploded view of the take-up reel assembly;
FIG. 5 is an exploded view of the winder gear train assembly.

### DETAILED DESCRIPTION OF THE PREFERRED EMBODIMENT

In the following detailed description of the preferred embodiment, reference is made to an illustrative embodiment of the invention.

U.S. Patent Application 07/343,851, filed 04/26/89; U.S. Patent Application 07/353,826, filed 05/18/89; U.S. Patent Application 07/398,068, filed 08/24/89; U.S. Patent Application 07/398,069, filed 08/24/89; U.S. Patent Application 07/381,159, filed 07/17/89; and U.S.Patent Application 07/482,071, filed February 20, 1990 relate to the tape cartridge and adaptor technology described herein. Each of these applications is incorporated by reference.

European Patent Application 0 201 156, filed on 18.02.86 discloses a tape cassette adapted to detachably receive a tape cartridge in its housing where the take-up reel contained in the cassette is rotatably supported by an annular flange for winding the tape contained in said tape cartridge.

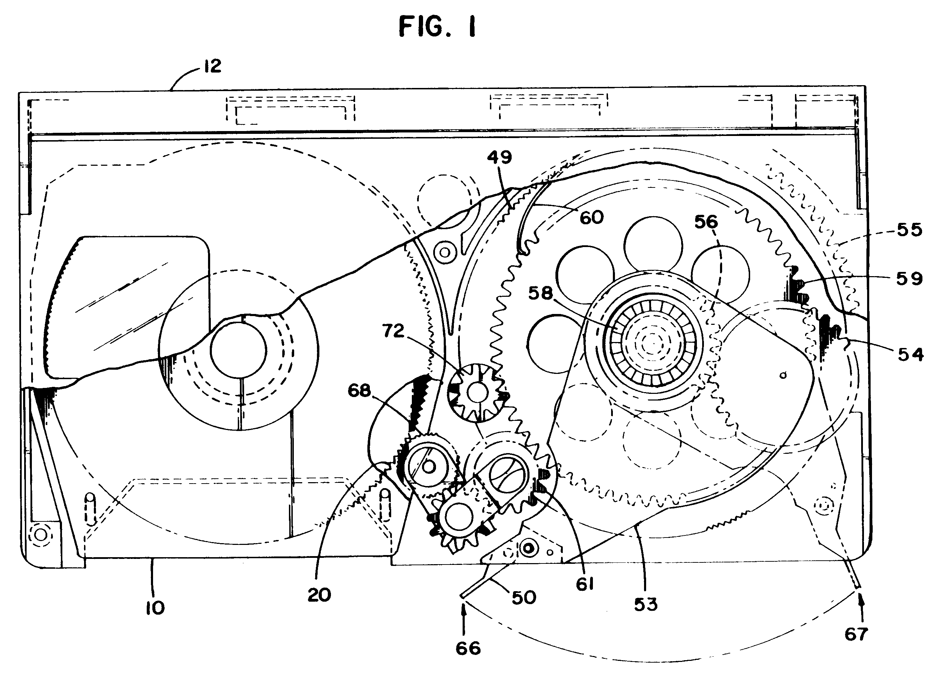

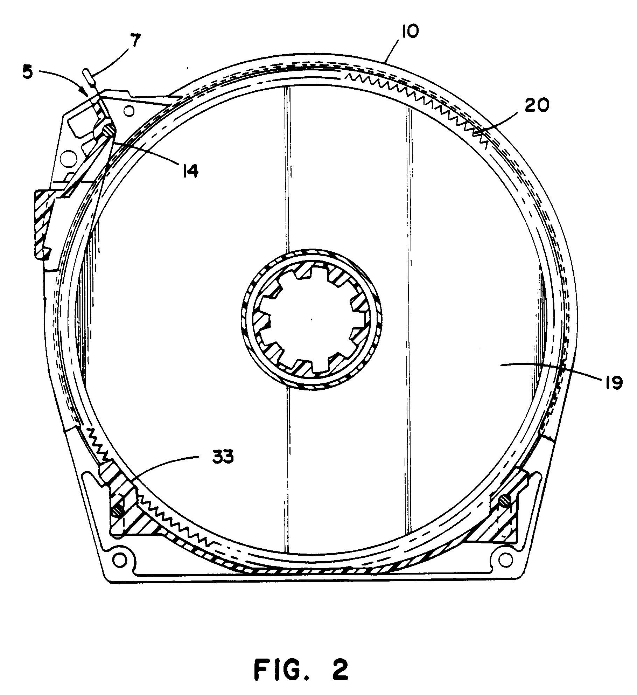

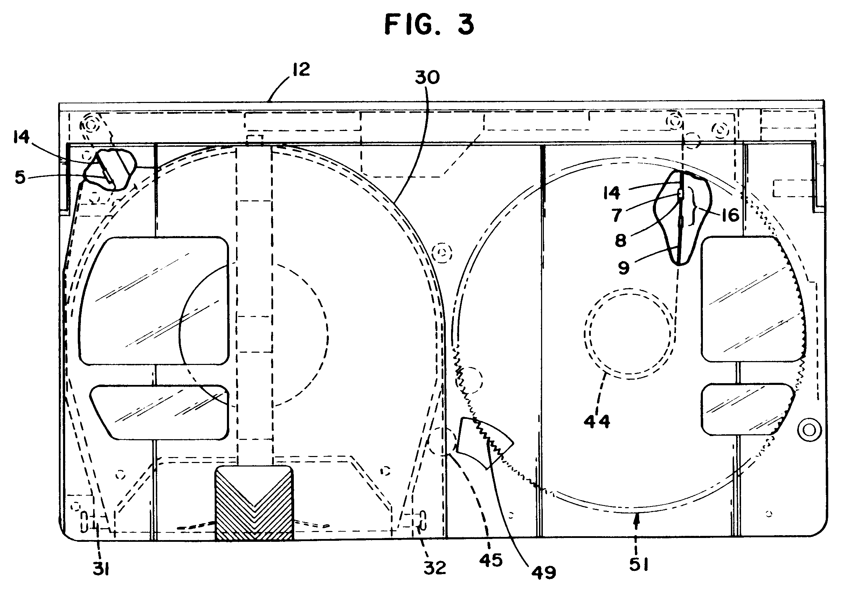

With reference to Fig. 1, the user inserts the video cartridge 10, into the adaptor 12. The cartridge 10 is shown in isolation in Fig. 2. The cartridge 10 is inserted into the adaptor 12 by opening the door 30 of the adaptor 12 and placing the cartridge 10 into a door pocket. Once the cartridge is seated in the door pocket, the door 30 is rotated from a first "open" position to a second "closed" position. Fig. 1 and Fig. 3 depict the door in the closed position. The door 30 pivots about an axis formed by hinge axle 31 and 32, as shown in Fig. 3.

The door closure operation performs a number of separate actions. Door closure seats the cartridge in the adaptor which releases a ratchet brake mechanism, shown generally in Fig. 2 as 33. Release of the ratchet brake mechanism permits the supply reel to rotate within the cartridge housing.

Door closure also makes the connection between a tape connector 7, and a tether connector 8. This union is called the interconnection and it is depicted as 16 in Fig. 3. The tape connector 7 is attached to a leader which is attached to the tape 14 stored on the supply reel 19. The tether connector 8 is connected to a tether 9 which, in turn, is attached to the take up hub 44 of the take-up reel 51. The completion of the tape-tether interconnection operates an interlock which releases the tape-tether interconnector at the cartridge at the position labeled 5. At this point the tape is free to move in the "play" direction.

The tape-tether interconnection 16 must be transferred to the take up reel 51 before the adaptor 12 is inserted into the video tape machine to prevent damage to the tape heads of the videotape machine.

A manually operated winding mechanism disclosed herein, is provided to permit the operator to advance the tape-tether interconnection 16 in the play direction, onto the take up reel. This process moves the tape-tether interconnection from a "home position" in a corner 5 of the cartridge to a "play position" where the interconnection is wound onto the take-up reel. This event prepares the adaptor for insertion into the videotape machine.

At the conclusion of play, the adaptor is removed from the videocassette machine at the end of the rewind cycle. The rewind cycle leaves the interconnection on the take-up side of the adaptor in the "play position". The user then operates the manually operated winder to return the tape-tether interconnection 16 to the "home position" 5. Once the interconnection is in the home position, the user may rotate the door into the open position and remove the cartridge from the adaptor.

The winding mechanism is displayed in phantom view in Fig. 1. Power is applied to the winder by actuation of the thumb lever 50 which may be moved in an arcuate path, pivoting about the axis of the take up reel 51.

As previously described the winder can move the tape in either the "play" direction or the "rewind" direction. Movement in the "play" direction is accomplished by applying force to the lower gear tooth flange 49 of the take up reel 51. Movement in the "rewind" direction is accomplished by applying force to the gear tooth flange 20 of the supply reel 19. Both of these gear tooth flanges are located on the bottom of their respective reels.

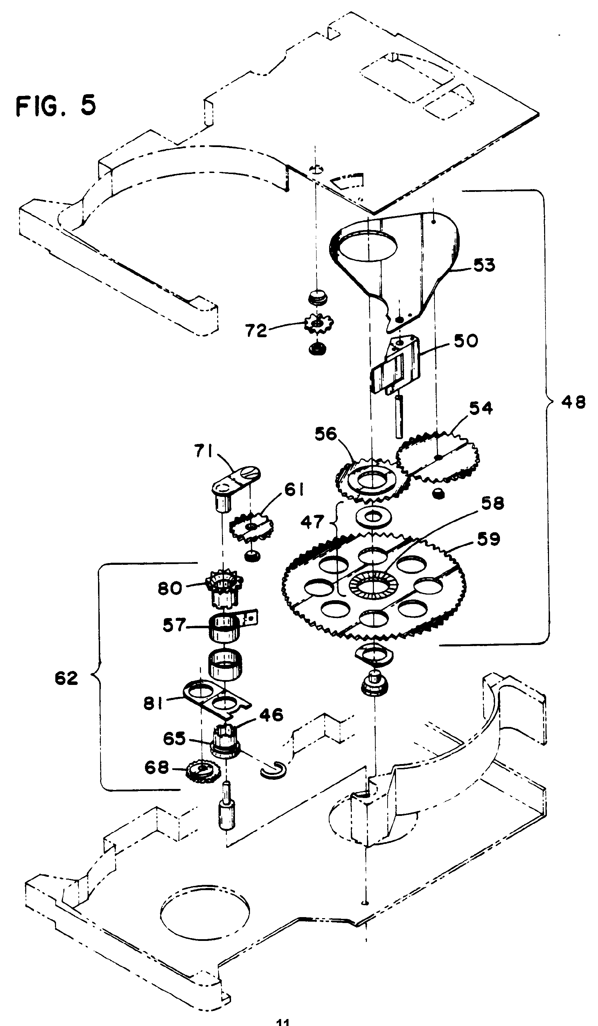

The gear train which selectively transfers power from the thumb lever to the appropriate gear flange includes a number of mechanical elements. With reference to the exploded perspective view of Fig. 5, and the plan view of Fig. 1, a planetary gear set 48 is driven by the thumb lever 50. Power is transferred out of the planetary gear set through the sun gear 56. The sun gear is concentric with, and attached to a spur gear 59 through a ratchet assembly 47. Power is taken from the spur gear 59 through an idler gear 61 which delivers power to a transfer gear set 62 which drives a clapper gear 68. The clapper gear is a switch gear which may selectively engage either the take up reel gear flange 49 (Fig. 3) or the supply reel gear flange 20 (Fig. 2).

In greater detail and with reference to Fig. 1 the thumb lever 50 is attached to a planet gear carrier 53. A single planet gear 54 is mounted for rotation on the carrier 53 and engages a fixed, toothed sector gear segment 55 and a sun gear 56. The planet gear carrier 53 is pivotally mounted concentric with the sun gear 56 and is free to rotate in a arcuate path from a first "retracted" position 66 to a second "extended" position 67. A constant force spring 57 (Fig. 5) is provided to return the lever from the extended position to the retracted position. Rotary motion imparted to the sun gear 56 by the thumb lever is transferred through a ring of ratchet teeth 58 to a spur gear 59. The spur gear 59 engages a pawl 60 (Fig. 1) to prevent reverse rotation of the spur 59 as the lever 50 is retracted by the constant force spring 57. This pawl 60 cooperates with the ratchet assembly 47 to convert the lever motion into a rotary motion and to permit multiple strokes of the lever 50 to be accumulated to move the tape 14.

The gear ratios are selected to provide approximately one reel rotation per lever stroke and approximately 4 lever strokes are required to advance the tape tether interconnection 16 from the home position 5 to the play position. preferably, the selected reel will rotate one revolution for each stroke of the winder.

The idler gear 61 couples motion from the spur gear 59 to the transfer gear assembly 62 (Fig. 5). The transfer gear assembly serves to transfer power from the upper portion of the adaptor to the lower portion of the adaptor. The output transfer gear 65 engages and drives the clapper gear 68. The clapper gear is mounted to a pivoting arm 81 which may be moved selectively, from engagement with the take up reel lower flange 49, to engagement with the supply reel lower flange gear 20. In operation the arm 81 rotates as a reaction to the rotational input to the input transfer gear 80. The clapper gear is dragged into position by frictional engagement with the transfer gear assembly made up of gears 80 and 65. Thus, the direction of rotation of the transfer gears selects which of the two reels is engaged by the clapper gear 68.

In Fig. 1 the idler gear 61 is shown in direct engagement with the spur gear 59. Reverse rotation of the transfer gear assembly is required for rewind action. For reverse or rewind rotation the lower gear flange 20 of the supply reel 19, is driven by the winding mechanism. To change the direction of rotation the idler gear 61 is mounted on a rocker 71 which pivots about the axis of transfer gear assembly 62. Manual movement of the rocker 71 moves the idler gear 61 into engagement with a small reversing gear 72 which changes the direction of rotation of the idler gear 61.

The elements of the transfer gear assembly 62 are shown in Fig. 5. Power is supplied to the transfer gear assembly from the idler gear 61. This gear engages the input transfer gear 80. This input transfer gear 80 is attached the output transfer gear 65 through a mating structure shown in Fig. 5 as a square tooth spline 46.

The clapper gear 68 is mounted on an arm 81 which is adapted for pivotal motion around the axis of the transfer gear assembly. Rotation about this pivot will cause the clapper gear to engage either the supply reel gear flange 20 or the take up reel gear flange 49. The arm rotates into engagement with the selected gear flange through the rotation of the arm 81.

In operation, the user may advance or rewind tape through the thumb operated clapper gear. However once the adaptor has been inserted into the videotape machine the tape transport will insert a pin into the aperture 45 formed in the adaptor as seen in Fig. 3. The pin, which is not shown, contacts the conical interior surface of the clapper gear 68 and disengages it from either of the reel gear flanges.

It is important to reduce gear train drag wherever possible to improve the acceptability of the adaptor. A significant reduction in drag is achieved in the present design by de-coupling the take up reel drive spline 38 from the take up reel hub 44 under certain operating conditions. It is preferred to have the drive spline de-coupled while the adaptor winder is being used. This result is achieved through the use of a specialized dog clutch.

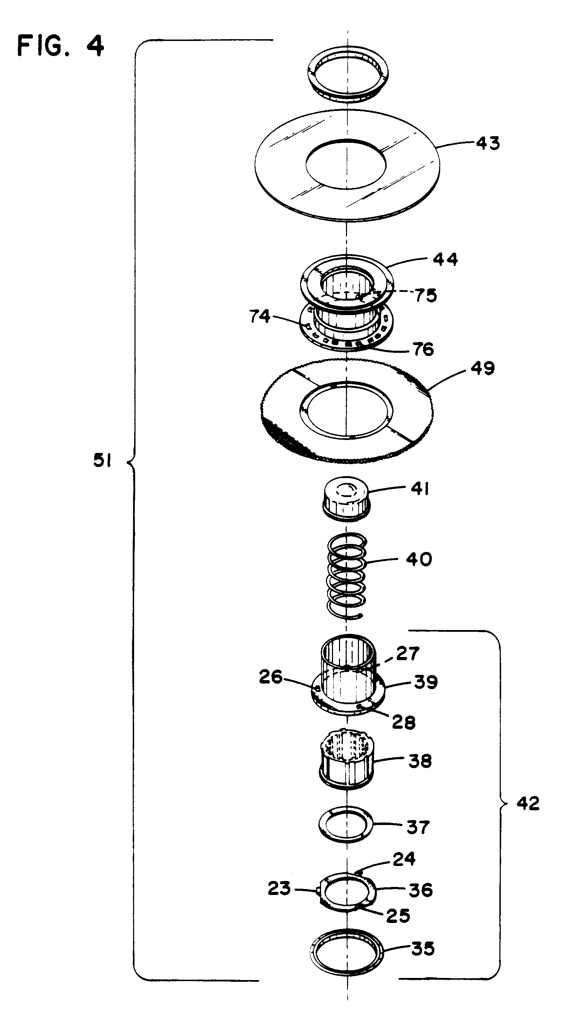

With reference to Fig. 4, the take up reel 51 is made up of an upper 43 and lower gear flange 49 which are bonded to the hub take up hub 44. These three elements form a unitary spool for receiving and storing tape. The take up reel 51 is driven by the videotape machine through a drive hub assembly 42. In operation, the video tape machine introduces a drive spindle into the spline hub 38 to rotate the take-up reel.

The splined hub 38 is connected to the dog hub 39 and forms a unitary structure with the dog hub 39. The dog ring 36 is forced away from the dog hub 39 by a spring washer 37. Flange surfaces the on the ends of the dogs 23-25 of the dog ring 36 cooperate with the retainer ring 35 to retain the dog ring 36 in alignment with the holes 26-28 of the dog hub 39. In operation, rotary motion supplied to the spline hub 38 is imparted to the take-up hub 44 if the dogs 23-24 inserted into and engage the holes 26-28 spaced around the outer edge of the dog hub 39. Typically, this condition will occur when the adaptor is in the videotape machine and the videotape machine drive spindle has entered the splined hub 38 and compressed the spring washer 37. Typically when the adaptor is out of the videotape machine the spring washer 37 urges the dogs out of engagement with the drive holes 74-76 of the take-up hub 44 and thus disengages the clutch, permitting free rotation of the take-up reel by the winder mechanisms.

This illustrative embodiment of the invention provides a convenient and effective method of preparing the adaptor for insertion into a videocassette machine.

## Claims

1. A videotape adaptor (12), for use with a tape cartridge of the type having a supply reel and having a gear flange (20) on said supply reel for rotating said supply reel; said adaptor (12) including:
a housing adapted to receive said tape cartridge;
a take-up reel (51) located in said housing, adapted for rotation within said housing of the type having a flange for rotatably supporting said take-up reel characterized by further comprising:
gear train means (48,62) located in said housing, for selectively coupling power to said supply reel and to said take-up reel;
lever means (50) located in said housing coupled to said gear train means for supplying power to selectively wind said take up reel and to selectively rewind said supply reel.

2. The adaptor (12) of claim 1 wherein said gear train means (48,62) comprises:
ratchet means (47) located in said housing coupled to said lever means (50) for converting lever motion into rotary motion;
gear means (56,59,61,80) located in said housing coupled to said ratchet means (47) for transferring said rotary motion to a clapper gear (68);
said gear means (56,59,61,80) including selection means (80,65) for selectively directing power to either said take-up reel or said supply reel;
said clapper gear (68) mounted for pivotal motion, coupled to said gear means (56,59,61,80) for selectively transferring power to rewind said supply reel and for selectively transferring power to wind said take-up reel.

3. The adaptor of claim 1 wherein said gear train means (48,62) comprises:
planetary gear set means (48) coupled to said lever means for converting reciprocating motion of said lever to a rotary motion;
transfer gear means (80,65) coupled to said planetary gear set means for transferring said rotary motion to said supply reel and to said take-up reel, to selectively wind said take up reel and to selectively rewind said supply reel.

## Patentansprüche

1. Adapter (12) für Videobänder zur Verwendung bei einer Bandkassette des Typs mit einer Abwickelspule und einem Antriebsflansch (20) auf der Abwickelspule, der die Abwikkelspule in Drehung versetzt; wobei der Adapter (12) folgendes umfaßt:
ein Gehäuse zur Aufnahme der Bandkassette;
eine in dem Gehäuse angeordnete Aufwickelspule (51), die sich in dem Gehäuse drehen kann und einen Flansch aufweist, auf dem die Aufwickelspule drehbar gelagert ist;
dadurch gekennzeichnet, daß der Adapter weiterhin folgendes umfaßt:
eine in dem Gehäuse angeordnete Getriebeeinheit (48, 62), die die Kraft wahlweise auf die Abwickelspule und auf die Aufwickelspule überträgt;
eine in dem Gehäuse angeordnete Hebeleinrichtung (50), die mit der Getriebeeinheit gekoppelt ist, um die Kraft zu liefern, mit der wahlweise die Aufwickelspule aufgewickelt und die Abwickelspule abgewickelt wird.

2. Adapter (12) nach Anspruch 1, bei dem die Getriebeeinheit (48, 62) folgendes umfaßt:
eine in dem Gehäuse angeordnete Ratscheneinrichtung (47), die mit der Hebeleinrichtung (50) gekoppelt ist, um die Hebelbewegung in eine Drehbewegung umzuwandeln;
eine in dem Gehäuse angeordnete Zahnradeinrichtung (56, 59, 61, 80), die mit der Ratscheneinrichtung (47) gekoppelt ist, um die Drehbewegung auf ein Zahnrad (68) zu übertragen;
wobei die Zahnradeinrichtung (56, 59, 61, 80) eine Wähleinrichtung (80, 65) umfaßt, um die Kraft wahlweise auf die Aufwickelspule oder auf die Abwickelspule zu richten;
wobei das drehbar gelagerte Zahnrad (68) mit der Zahnradeinrichtung (56, 59, 61, 80) gekoppelt ist, um wahlweise die Kraft zum Abwickeln der Abwickelspule oder zum Aufwikkeln der Aufwickelspule zu übertragen.

3. Adapter nach Anspruch 1, bei dem die Getriebeeinheit (48, 62) folgendes umfaßt:
ein Planetengetriebe (48), das mit der Hebeleinrichtung gekoppelt ist, um die Hin- und Herbewegung des Hebels in eine Drehbewegung umzuwandeln;
ein Übertragungsrad (80, 65), das mit dem Planetengetriebe gekoppelt ist, um die Drehbewegung zur Abwickelspule und zur Aufwickelspule zu übertragen, um wahlweise die Aufwikkelspule aufzuwickeln und die Abwickelspule abzuwickeln.

## Revendications

1. Adaptateur pour bande vidéo (12), utilisable avec une cartouche de bande du type ayant une bobine d'alimentation et comportant une collerette dentée (20) sur ladite bobine d'alimentation pour faire tourner la dite bobine d'alimentation ; ledit adaptateur (12) comprenant :
un boîtier prévu pour recevoir ladite cartouche de bande ;
une bobine de reprise (51) placée dans ledit boîtier , prévue pour une rotation à l'intérieur dudit boîtier et du type comportant une collerette pour supporter en rotation ladite bobine de reprise ;
caractérisé en ce qu'il comprend en outre :
un train d'engrenages (48,62) placé dans ledit boîtier, pour appliquer sélectivement la force d'entraînement à ladite bobine d'alimentation et à ladite bobine de reprise ; et
un dispositif à levier (50) placé dans ledit boîtier et relié audit train d'engrenages de manière à fournir une force d'enroulement sélectivement à ladite bobine de reprise et une force de réenroulement ou de retour sélectivement à ladite bobine d'alimentation.

2. Adaptateur (12) suivant la revendication 1, dans lequel ledit train d'engrenages (48,62) comprend :
un dispositif à rochet (47) placé dans ledit boîtier et relié audit dispositif à levier (50) pour convertir le mouvement du levier en un mouvement rotatif ;
un dispositif de pignons (56,59,61,80) placé dans ledit boîtier et relié audit dispositif à rochet (47) pour transférer ledit mouvement de rotation à un pignon oscillant de commutation (68) ;
ledit dispositif de pignons (56,59,61,80) comprenant des moyens de sélection (80,65) pour diriger sélectivement la force d'entraînement vers ladite bobine de reprise ou ladite bobine d'alimentation ;
ledit pignon de commutation (68) étant monté pour un mouvement pivotant et couplé audit dispositif de pignons (56,59,61,80) pour transférer sélectivement la force afin de réenrouler la bande sur ladite bobine d'alimentation et pour transférer sélectivement la force afin d'enrouler la bande sur ladite bobine de reprise.

3. Adaptateur suivant la revendication 1, dans lequel ledit train d'engrenages (48,62) comprend :
un ensemble d'engrenages planétaires (48) relié audit dispositif à levier pour convertir le mouvement alternatif dudit levier en un mouvement rotatif ; et
un ensemble de pignons de transfert (80,65) couplé audit ensemble d'engrenages planétaires pour transférer ledit mouvement rotatif à ladite bobine d'alimentation et à ladite bobine de reprise, afin d'enrouler sélectivement la bande sur ladite bobine de reprise et de réenrouler sélectivement la bande sur ladite bobine d'alimentation.
